# EUROPÄISCHE PATENTSCHRIFT

(11) **EP 3 192 755 B1**
(45) Veröffentlichungstag und Bekanntmachung des Hinweises auf die Patenterteilung: **31.07.2019**
(21) Anmeldenummer: 16151763.6
(22) Anmeldetag: 18.01.2016
(51) Int. Cl.: B65G 47/19, B65G 47/51

(54) **FÖRDERVORRRICHTUNG MIT FÖRDERSTROMBEGRENZER**
CONVEYOR DEVICE WITH FEED FLOW LIMITER
DISPOSITIF D'ACHEMINEMENT DOTE D'UN LIMITEUR DE DEBIT

(43) Veröffentlichungstag der Anmeldung: 19.07.2017
(73) Patentinhaber: Joseph Vögele AG, 67075 Ludwigshafen (DE)
(72) Erfinder: FICKEISEN, Steffen, 67098 Bad Dürkheim (DE); GODARD, Laszlo, 68519 Viernheim (DE); BUSCHMANN, Martin, 67435 Neustadt (DE)
(74) Vertreter: Grünecker Patent- und Rechtsanwälte PartG mbB

(56) Entgegenhaltungen:
- GB-A- 886 191
- US-A- 1 982 824
- US-A- 4 108 301

## Beschreibung

Die Erfindung bezieht sich auf Fördervorrichtungen, insbesondere solche, die im Zusammenhang mit Straßenbauarbeiten eingesetzt werden und dabei z.B. Asphalt, Kies, Sand oder andere Schüttgüter fördern. Solche Fördervorrichtungen weisen häufig ein oder mehrere Förderbänder auf, auf denen das Schüttgut transportiert wird. Diese Förderbänder können muldenartig ausgeführt sein, um zu verhindern, dass Schüttgut seitlich vom Förderband fällt.

Die Förderrate von Förderbändern, d.h. die Menge (z.B. ausgedrückt durch die Masse oder das Volumen) des pro Zeiteinheit geförderten Schüttgutes, wird durch eine Veränderung der Fördergeschwindigkeit gesteuert. Eine solche Steuerung bringt den Nachteil mit sich, dass insbesondere bei langen Förderbändern für jede Anpassung der Förderrate eine große Menge, d.h. Masse, an Fördermaterial beschleunigt oder abgebremst werden muss. Dies wirkt sich negativ auf die Energieeffizienz und die Verschleißeigenschaften der Komponenten des Förderbands aus. Darüber hinaus muss bei Förderbändern, bei denen der abgeworfene Förderstrom einen bestimmten Punkt treffen soll, die Neigung des Förderbandes entsprechend der veränderten Fördergeschwindigkeit angepasst werden, damit auch nach einer Veränderung der Fördergeschwindigkeit der gleiche Punkt getroffen werden kann.

Das Dokument US 1 982 824 offenbart eine Fördervorrichtung nach dem Oberbegriff des Anspruchs 1.

Aus der US 1 982 824 ist es bekannt, in einen Förderstrom aus Schüttgut ragende Bleche einzusetzen, um Schüttgut gezielt von einem Förderband herunter zu leiten. Dabei kann eingestellt werden, wie weit die Bleche in den Förderstrom hineinragen sollen.

Aus der DE 93 08 170 U1 der Anmelderin sind Dosierschieber bekannt, die die Größe einer Durchgangsöffnung eines Förderkanals, durch den ein Förderer verläuft, regeln. Dazu werden sie von oben senkrecht in Richtung des Förderers geschoben, um die darauf transportierte Materialmenge zu begrenzen. Eine solche Konfiguration kann insbesondere bei muldenartig ausgeführten Förderbändern nachteilig sein, denn in diesem Fall muss die Geometrie eines solchen Dosierschiebers an die Muldenform des Förderbandes angepasst sein, um eine praktikable Begrenzung des Materialstroms zu gewährleisten. Die Muldenform des Förderbandes kann jedoch von der Masse und der Beschaffenheit des geförderten Schüttgutes abhängig sein, wogegen eine angepasste Formgebung des Dosierschiebers lediglich einer bestimmten Muldenform gerecht werden kann. Insbesondere bei flachen Förderbändern wird durch einen Dosierschieber, der von oben in den Materialstrom bewegt wird, eine seitliche Verteilung des Schüttgutes begünstigt, wodurch Schüttgut seitlich von dem Förderband fallen kann. Darüberhinaus kann es bei muldenartig ausgeführten Förderbändern in einem Bereich vor einer Umlenkrolle, in dem das muldenartig geformte Förderband in eine flache Form übergeht, um das reibungslose Passieren des Förderbandes um die Umlenkrolle zu gewährleisten, d. h. beim sogenannten Ausmulden des Förderbandes, vorkommen, dass Schüttgut zur Seite rollt und ebenfalls seitlich vom Förderband fällt.

Aufgabe der Erfindung ist es, eine Fördervorrichtung insbesondere mit Bezug auf die vorgenannten Nachteile auf möglichst einfache konstruktive Art und Weise zu verbessern.

Diese Aufgabe wird gelöst durch eine Fördervorrichtung gemäß Anspruch 1.

Vorteilhafte Weiterbildungen sind in den Unteransprüchen angegeben.

Eine erfindungsgemäße Fördervorrichtung umfasst ein Förderband mit einem Fördertrum zum Fördern von Schüttgut und ein Rücklauftrum. Das Fördertrum weist eine Förderfläche auf, auf der ein Materialstrom verläuft, dessen Förderrate durch das Produkt aus einer Lineargeschwindigkeit des Fördertrums und einem Förderquerschnitt des Materialstroms gegeben ist, und mindestens zwei variable Förderstrombegrenzer, die zum variablen Verändern des auf ein und demselben Förderturm verlaufenden Materialstroms vorgesehen sind und die zu diesem Zweck jeweils zwischen einer ersten und einer zweiten Position bewegbar sind. Dabei ist der Förderquerschnitt stromabwärts der Förderstrombegrenzer kleiner, wenn mindestens einer der Förderstrombegrenzer in der zweiten Position angeordnet ist, als wenn beide Förderstrombegrenzer in der ersten Position angeordnet sind. Die Förderstrombegrenzer umfassen einen Halbzylinder. Als Förderquerschnitt kann dabei die Fläche angesehen werden, die durch einen Schnitt des Förderstroms mit einer Ebene entsteht, die senkrecht zu einer Förderrichtung, in der das Schüttgut gefördert wird, orientiert ist. Ein Förderquerschnitt kann als kleiner als ein vorheriger Förderquerschnitt angesehen werden, wenn er einen kleineren Flächeninhalt aufweist, schmaler ist oder auf irgendeine andere Weise in seiner Ausdehnung auf dem Fördertrum senkrecht zur Förderrichtung begrenzt wird. Die Bewegungsrichtung der Förderstrombegrenzer kann unterschiedlich sein.

Die Förderstrombegrenzer können entlang der Förderrichtung versetzt oder auf gleicher Höhe angeordnet sein. Insbesondere können sie in Förderrichtung nacheinander oder gleichzeitig in den Materialstrom eingreifen, wenn sie in der zweiten Position angeordnet sind.

Die erfindungsgemäße Konfiguration ermöglicht eine Einstellung beziehungsweise Veränderung der Förderrate auch bei konstanter Geschwindigkeit des Förderbandes. Auch weitere der obengenannten Nachteile konventioneller Fördervorrichtungen können so vermieden werden; z. B. können die Förderstrombegrenzer durch ihre unterschiedliche Bewegungsrichtung besser an muldenartig ausgeführte Förderbänder angepasst werden.

Die Erfindung ist bei Förderbändern anwendbar die eine ebene Förderfläche aufweisen oder muldenartig gekrümmt sind, beispielsweise um eine in Förderrichtung verlaufende Achse.

Es ist denkbar, dass die Förderstrombegrenzer sich bis auf die Höhe der Förderfläche erstrecken. Auf diese Weise kann auch ein Förderstrom aus flach auf der Förderfläche verteiltem Schüttgut effektiv begrenzt werden. Besonders vorteilhaft ist es, wenn die Förderstrombegrenzer sich sowohl in der ersten als auch in der zweiten Position bis auf die Höhe der Förderfläche erstrecken.

Es ist außerdem vorstellbar, dass die Förderstrombegrenzer aus im Wesentlichen seitlichen Richtungen in den Materialstrom hinein bewegbar sind. Neben der Veränderung der Förderrate kann so auch gewährleistet werden, dass der Materialstrom einen ausreichenden Abstand zu dem seitlichen Rand des Förderbandes einhält und kein Schüttgut von dem Förderband fällt. Eine im Wesentlichen seitliche Richtung kann beispielsweise dadurch gegeben sein, dass ein Richtungsvektor dieser im Wesentlichen seitlichen Richtung, ein Richtungsvektor der Förderrichtung und ein senkrecht auf die Förderfläche stehender Vektor linear unabhängig sind.

Die Förderstrombegrenzer können z.B. symmetrisch zu einer Mitte der Förderfläche angeordnet sein. Außerdem ist es denkbar, dass die beiden Förderstrombegrenzer aus unterschiedlichen, im Wesentlichen seitlichen Richtungen in den Materialstrom hinein bewegbar sind. Zum Beispiel können die Förderstrombegrenzer aus im Wesentlichen gegenüberliegenden Richtungen in den Materiastrom hinein bewegbar sein.

Vorteilhaft ist es, wenn die Förderstrombegrenzer synchron bewegbar sind. Dadurch kann beispielsweise gewährleistet werden, dass der der Materialstrom auf der Förderfläche zentriert bleibt. Es ist jedoch auch denkbar, dass die Förderstrombegrenzer asynchron bewegbar sind.

Es ist denkbar, dass die Förderstrombegrenzer rotatorisch zu betätigen sind. Dabei können die Förderstrombegrenzer auch linear bewegt werden, z. B. durch eine oder mehrere Spindeln oder Kurbeln bzw. einen oder mehrere Hebel.

Es ist darüber hinaus vorstellbar, dass der Förderquerschnitt durch eine Rotation der Förderstrombegrenzers veränderbar ist. Dabei können die Rotationsachsen, um die die Förderstrombegrenzer rotierbar sind, jeweils senkrecht zu der Förderfläche verlaufen. Auch parallel zur Förderrichtung verlaufende Rotationsachsen sind denkbar. Eine Rotation des Förderstrombegrenzers kann durch eine rotatorische Betätigung erfolgen, beispielsweise durch einen Elektro- oder Hydraulikmotor, oder aber durch eine lineare Betätigung, z. B. durch einen Hydraulik- oder Pneumatikzylinder.

Die Förderstrombegrenzer können z. B. in den Materialstrom hineinschwenkbar, hineinschiebbar oder hineinklappbar sein.

Es ist vorteilhaft, wenn der Förderquerschnitt in einem Förderbereich, in dem der Förderstrom die Förderstrombegrenzer passiert, entlang einer Förderrichtung variiert. Beispielsweise kann der Förderquerschnitt an einem Anfang des besagten Förderbereiches, den der Förderstrom zu einem früheren Zeitpunkt passiert, größer sein als an einem Ende des Förderbereichs, das der Förderstrom zu einem späteren Zeitpunkt passiert. Die Veränderung des Förderquerschnitts kann dabei kontinuierlich oder aber in einer oder mehreren Stufen geschehen.

Es ist vorteilhaft, wenn die Förderstrombegrenzer jeweils zwischen der ersten und der zweiten Position stufenlos einstellbar sind. Auf diese Weise kann der Materialstrom flexibel und sehr genau an den jeweiligen Bedarf angepasst werden. Die Förderstrombegrenzer können manuell einstellbar sein.

In einer Variante können die Förderstrombegrenzer in Abhängigkeit von der Fördergeschwindigkeit oder einem anderen Parameter einstellbar sein. Auf diese Art und Weise ist beispielsweise eine automatische Anpassung an verschiedene Gegebenheiten, die während des Betriebs der Fördervorrichtung automatisch erfasst werden können, möglich.

Denkbar ist, dass die Förderstrombegrenzer durch ein elektrisches, hydraulisches oder pneumatisches Stellglied einstellbar sind.

Bei der Fördervorrichtung kann es sich beispielsweise um einen Straßenfertiger, einen Beschicker oder ein Asphaltmischwerk oder nur einen Teil derselben handeln.

Die Erfindung bezieht sich auf eine Fördervorrichtung der vorstehend beschriebenen Art. Im Folgenden werden vorteilhafte Ausführungsbeispiele anhand von Zeichnungen näher erläutert.
- Figur 1: zeigt eine schematische Seitenansicht eines Förderbandes einer erfindungs-gemäßen Fördervorrichtung mit einem erfindungsgemäßen Förderstrombe-grenzer.
- Figur 2: zeigt eine schematische Frontansicht in Förderrichtung des Förderbandes aus Figur 1.
- Figuren 3a und 3b: zeigen eine schematische Draufsicht von oben auf die in Figur 1 und 2 gezeig-ten Komponenten gemäß einem ersten Ausführungsbeispiel.
- Figuren 4a und 4b: sind jeweils schematische Draufsichten von oben auf die in den vorherigen Fi-guren gezeigten Komponenten gemäß einem zweiten Ausführungsbeispiel.
- Figur 5a: zeigt eine schematische Frontansicht in Förderrichtug eines muldenartig ausge-führten Förderbandes mit Förderstrombegrenzern gemäß einem weiteren Aus-führungsbeispiel.
- Figur 5b: zeigt eine schematische Draufsicht von oben auf die in Figur 5a gezeigten Komponenten.
- Figur 6a: zeigt eine schematische Frontansicht in Förderrichtung auf ein muldenartig ausgeführtes Förderband mit Förderstrombegrenzern gemäß einem weiteren Ausführungsbeispiel.
- Figur 6b: ist eine schematische Draufsicht von oben auf die in Figur 6a gezeigten Kom-ponenten.
- Figur 7a: ist eine schematische Frontansicht in Förderrichtung eines muldenartig ausge-führten Förderbandes mit Förderstrombegrenzern gemäß einem weiteren Aus-führungsbeispiel.
- Figur 7b: ist eine schematische Draufsicht von oben auf die in Figur 7a gezeigten Kom-ponenten
- Figur 8: zeigt eine Fördervorrichtung gemäß einem weiteren Ausführungsbeispiel.
- Figur 9: zeigt eine weitere Fördervorrichtung gemäß einem weiteren Ausführungsbei-spiel der Erfindung.

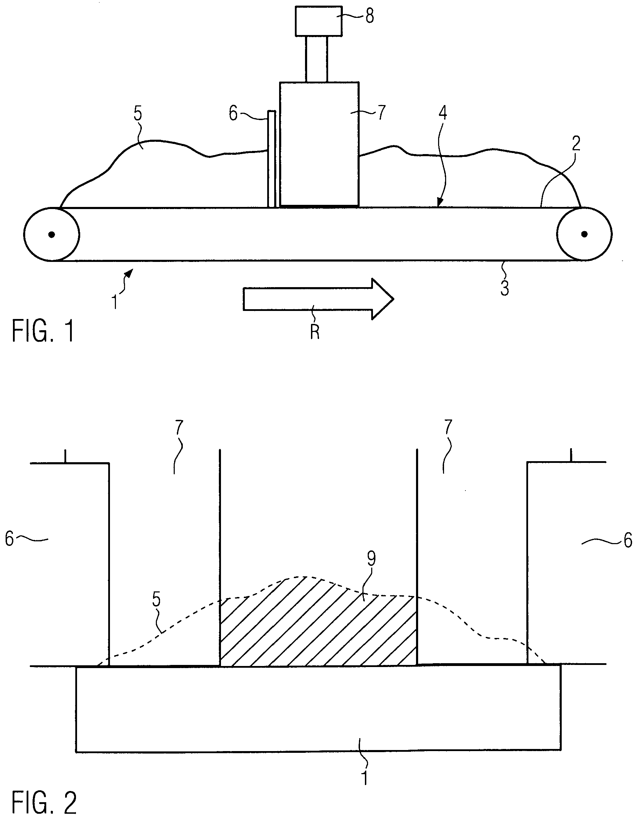

In Figur 1 ist ein schematisch dargestelltes Förderband 1 zu sehen. Es weist ein Fördertrum 2 und ein Rücklauftrum 3 auf. Das Fördertrum hat eine Förderfläche 4, auf der ein Materialstrom 5 verläuft. Der Materialstrom 5 wird durch das Förderband 1, genauer gesagt durch das Fördertrum 2, in einer Förderrichtung R transportiert. Im vorliegenden Ausführungsbeispiel ist eine Linse 6 vorgesehen. Diese ist jedoch nicht notwendigerweise erforderlich. Sie kann vorgesehen sein, um den Materialstrom 5 auf eine bestimmte Breite zu begrenzen und/oder einen ausreichenden Abstand zwischen dem Rand des Materialstroms und dem seitlichen Rand des Fördertrums 2 zu gewährleisten. Stromabwärts der Linse 6 sind Förderstrombegrenzer 7 angeordnet, von denen jedoch aufgrund der Ansicht nur einer sichtbar ist. Diese müssen jedoch nicht notwendigerweise stromabwärts von der Linse 6 angeordnet sein. Beispielsweise könnten sie auch stromaufwärts der Linse 6 vorgesehen werden. Ebenfalls zu erkennen ist ein Stellglied 8. Dieses kann zur Betätigung eines oder beider der Förderstrombegrenzer 7 vorgesehen sein. Gemäß der Erfindung können die Förderstrombegrenzer 7 jeweils zwischen einer ersten und einer zweiten Position bewegt werden, wie später noch erläutert werden wird.

In Figur 2 sind das Förderband 1, der Materialstrom 5, die Linse 6 sowie die Förderstrombegrenzer 7 in einer Frontansicht mit Blickrichtung in der Förderrichtung R dargestellt. Ein Querschnitt des Materialstroms 5 stromaufwärts der Linse 6 ist durch eine gestrichelte Linie angedeutet. Ein Förderquerschnitt 9, der unmittelbar stromabwärts der Förderstrombegrenzer 7 vorliegt, ist durch eine schraffierte Fläche kenntlich gemacht. Durch die Anordnung der Förderstrombegrenzer 7 kann der Förderquerschnitt 9 unmittelbar nach den Förderstrombegrenzern 7 beeinflusst werden. Sind die Förderstrombegrenzer 7 in einer ersten Position angeordnet, ist der Förderquerschnitt 9 größer als wenn die Förderstrombegrenzer 7 in einer zweiten Position angeordnet sind. Im vorliegenden Ausführungsbeispiel sind zwei Förderstrombegrenzer 7 zur Beeinflussung des Materialstroms 5 auf ein und demselben Förderband 1 vorgesehen. Es ist jedoch eine höhere Anzahl an Förderstrombegrenzern 7 denkbar, d. h. auch mehr als zwei. Die Förderstrombegrenzer 7 können durch jeweils ein Stellglied 8 oder durch ein gemeinsames Stellglied 8 zwischen der ersten und der zweiten Position bewegt werden. Dies kann direkt oder indirekt durch einen Bediener erfolgen oder aber automatisch und/oder in Abhängigkeit von anderen Parametern gesteuert werden. Bei dem Stellglied 8 kann es sich um ein elektrisches, hydraulisches oder pneumatisches Stellglied handeln, z.B. um eine elektrische Linearverstellung.

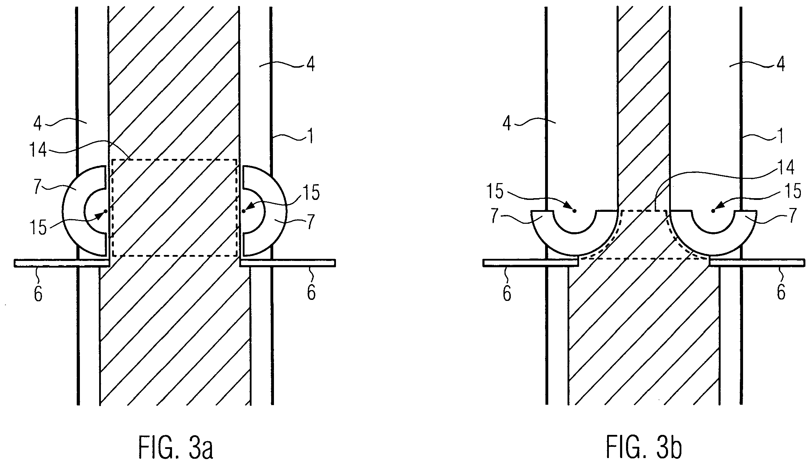

In den schematischen Draufsichten aus den Figuren 3a und 3b sind die ersten und zweiten Positionen der Förderstrombegrenzer 7 besser erkennbar. In Figur 3a sind die Förderstrombegrenzer 7 in der ersten Position dargestellt. In Figur 3b sind die Förderstrombegrenzer 7 in der zweiten Position dargestellt. Es ist deutlich zu erkennen, dass in Figur 3b der Förderquerschnitt 9, der direkt stromabwärts der Förderstrombegrenzer 7 vorliegt, deutlich schmaler ist als in Figur 3a. Die in den Figuren 3a und 3b dargestellten Positionen der Förderstrombegrenzer 7 sind als beispielshafte Endpositionen zu verstehen. Zwischen solchen Endpositionen können die Förderstrombegrenzer 7 stufenlos oder in definierten Stufen verstellbar sein. In dem in den Figuren 3a und 3b gezeigten Ausführungsbeispiel sind die Förderstrombegrenzer 7 symmetrisch und gegenüberliegend mit Bezug auf die Mitte des Förderbandes 1 angeordnet. Es sind jedoch auch beliebige andere geeignete Anordnungen denkbar, die später noch näher erläutert werden.

Im vorliegenden Ausführungsbeispiel sind die Förderstrombegrenzer 7 als Halbzylinder ausgeführt. Dadurch variiert der Förderquerschnitt 9 in einem Förderbereich 14, in dem der Materialstrom 5 die Förderstrombegrenzer 7 passiert, entlang der Förderrichtung R. Durch die zylindrische Form der Förderstrombegrenzer 7 im vorliegenden Ausführungsbeispiel geschieht dies kontinuierlich. Es ist jedoch ebenso denkbar, dass der Förderquerschnitt 9 in dem Bereich 14 stufenweise variiert.

Es sind beliebige andere geeignete Formgebungen für die Förderstrombegrenzer 7 vorstellbar. Darüber hinaus werden im vorliegenden Ausführungsbeispiel die Förderstrombegrenzer 7 rotatorisch betätigt. Dabei drehen sie sich um jeweils eine Rotationsachse 15 die jeweils senkrecht zur Förderfläche 4 steht. Denkbar sind jedoch auch beliebige andere geeignete Bewegungsformen, z.B. translatorische Verschiebungen.

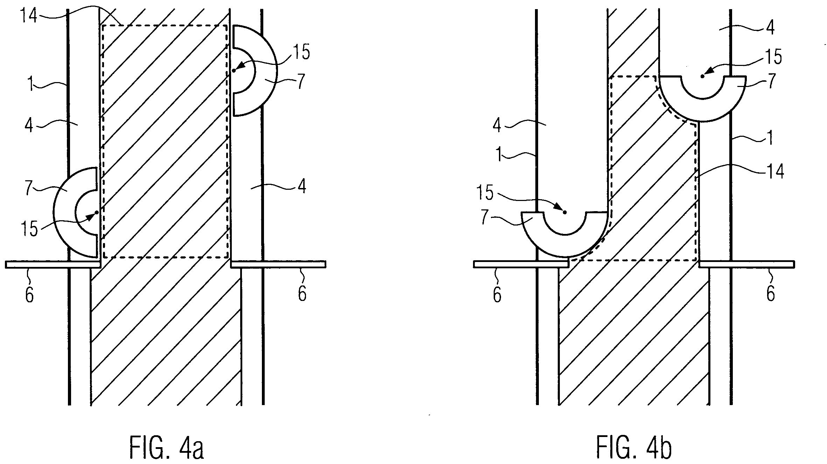

Das in den Figuren 4a und 4b dargestellte Ausführungsbeispiel entspricht weitestgehend dem in den Figuren 3a und 3b dargestellten Ausführungsbeispiel. Ein Unterschied besteht jedoch darin, dass die Förderstrombegrenzer 7 entlang der Förderrichtung R versetzt sind. Dadurch wird der Förderstrom 5 zunächst an einer ersten Stelle von einer ersten Seite begrenzt und weiter stromabwärts von einer zweiten Seite begrenzt. Dies kann in bestimmten Konfigurationen des Förderbandes 1 vorteilhaft sein. Zum Beispiel sind sogenannte Muldenförderbänder bekannt, bei denen das Fördertrum 2 z.B. einen annähernd V-förmigen Querschnitt aufweisen kann, beispielsweise um zu verhindern, dass Schüttgut über den seitlichen Rand hinaus von der Förderfläche 4 entweicht. Bei der Verwendung solcher Muldenförderbänder kann es vorteilhaft sein, die Förderstrombegrenzer 7 entsprechend den beiden Flanken des Förderbandes 1 zu neigen. Dabei kann es passieren, dass die Förderstrombegrenzer 7 bei einer gegenüberliegenden Anordnung kollidieren würden. Um den Förderstrom 5 dennoch von beiden Seiten aus zu begrenzen, kann beispielsweise das Ausführungsbeispiel, das in den Figuren 4a und 4b gezeigt ist vorgesehen sein.

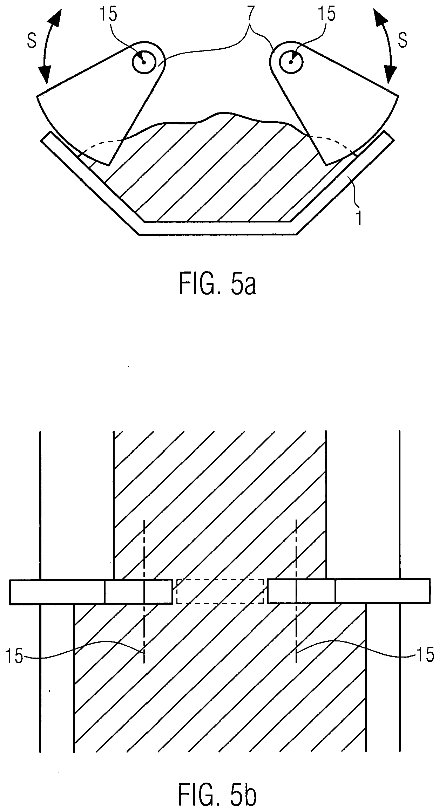

In den Figuren 5a und 5b ist eine weitere Ausführungsform der erfindungsgemäßen Förderstrombegrenzer 7 dargestellt. Diese Ausführungsform kann insbesondere dann vorteilhaft sein, wenn das Förderband 1 muldenartig ausgeführt ist. Im gezeigten Ausführungsbeispiel werden die Förderstrombegrenzer 7 um die Rotationsachse 15 geschwenkt. Die Rotationsachse 15 verläuft in diesem Ausführungsbeispiel parallel zur Förderrichtung R. Die Förderstrombegrenzer 7 können dabei eine fächerförmige Fom aufweisen. Figur 5b zeigt die Komponenten in einer Draufsicht von oben, wobei der Verlauf der Rotationsachse 15 und die Begrenzung des Materialstroms 5 besser erkennbar sind.

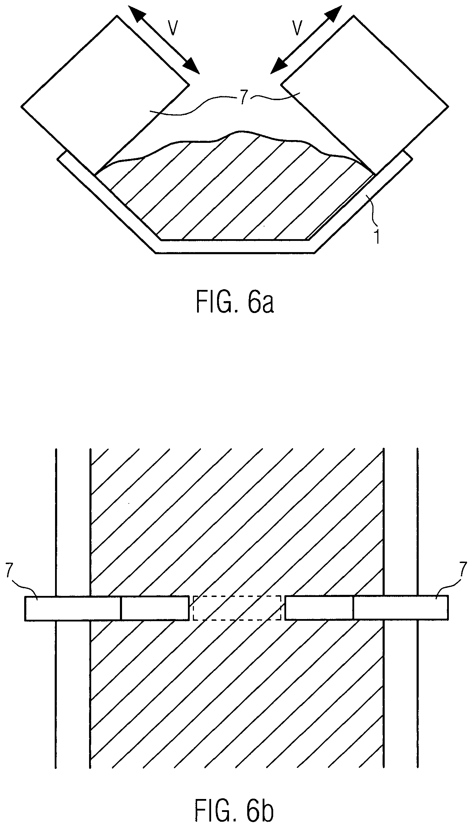

Die Figuren 6a und 6b zeigen eine weitere Ausführungsform der Förderstrombegrenzer 7. Diese Ausführungsform kann ebenfalls dann vorteilhaft sein, wenn das Förderband 1 muldenartig ausgeführt ist. Die Förderstrombegrenzer 7 sind hier in der Verschieberichtung V verschiebbar. Die Verschieberichtung V kann parallel zur Förderfläche 4 und/oder sekrecht zur Förderrichtung R verlaufen. Die Figur 6b zeigt die Komponenten in einer schematischen Draufsicht von oben. In Figuren 6a und 6b sind die Förderstrombegrenzer in der ersten Position dargestellt, so dass dort der Materialstrom 5 nicht begrenzt wird.

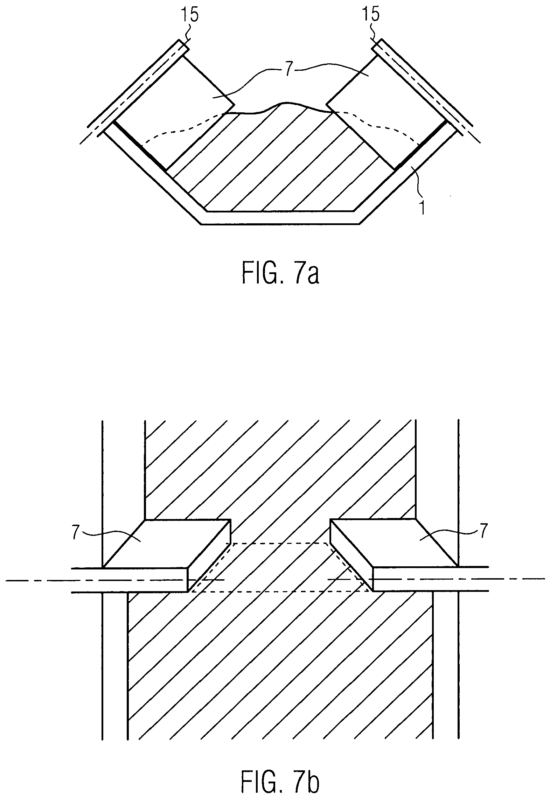

In Figur 7a ist ein weiteres Ausführungsbeispiel der Förderstrombegrenzer 7 dargestellt. Auch dieses kann insbesondere bei einer muldenartigen Ausführung des Förderbandes 1 von Vorteil sein. In diesem Ausführungsbeispiel werden die Förderstrombegrenzer 7 um die Rotationsachse 15 geschwenkt. Die Rotationsachse 15 verläuft im vorliegenden Fall senkrecht zur Förderfläche 4. Die Rotationsachse 15 kann darüberhinaus senkrecht zur Förderrichtung R verlaufen. Zur Illustration der Begrenzung des Materialstroms 5 ist in Figur 7b eine Draufsicht von oben angegeben.

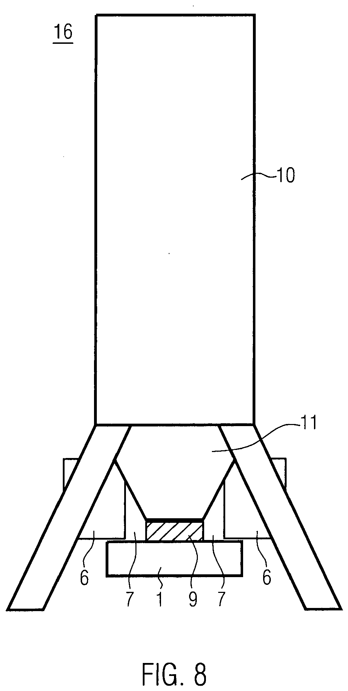

Als Beispiel für eine erfindungsgemäße Fördereinrichtung ist in Figur 8 ein schematisch dargestelltes Asphaltmischwerk 16 gezeigt. Dieses kann beispielsweise ein Silo 10 umfassen, aus dessen Materialauslass 11 Asphaltmischgut auf das Förderband 1 ausgetragen wird. Auch bei einer konstanten Fördergeschwindigkeit des Förderbandes 1 kann durch die erfindungsgemäße Konfiguration mit den Förderstrombegrenzern 7 die Fördermenge des Förderbandes 1 gesteuert werden. Bei der erfindungsgemäßen Fördervorrichtung kann es sich selbstverständlich auch um ein einfaches Lagersilo 10 handeln, das unabhängig von einem Asphaltmischwerk 16 vorgesehen ist.

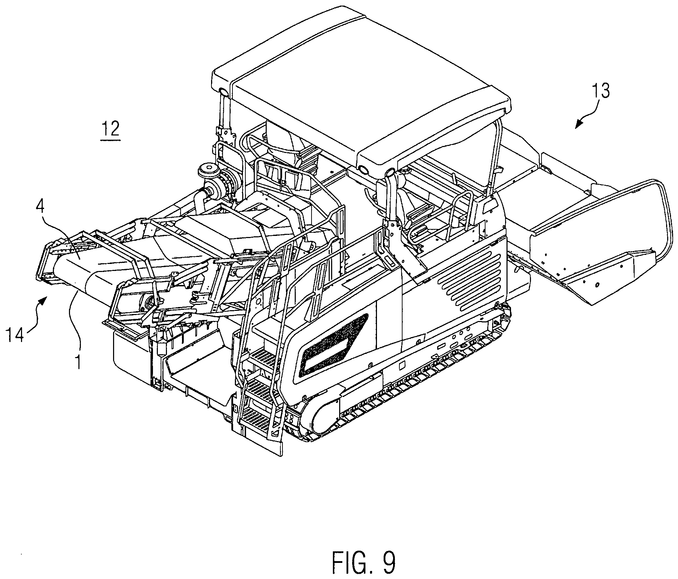

Als weiteres Beispiel für eine erfindungsgemäße Fördervorrichtung ist in Figur 9 ein Beschicker 12 gezeigt. Dieser weist einen Materialbunker 13 auf, der mit Schüttgut, insbesondere Asphalt, befüllt werden kann. Aus diesem Materialbunker 13 wird das Material durch das Förderband 1 abgezogen und zu einem Abwurf 14 befördert. Zwischen dem Materialbunker 13 und dem Abwurf 14 können die Förderstrombegrenzer 7 vorgesehen sein.

Die vorliegende Erfindung kann als stationäre oder aber als mobile, z.B. selbstfahrende, Fördervorrichtung ausgeführt sein. Ebenso ist eine Anwendung mit beliebigen Schüttgütern vorstellbar, auch wenn in den vorstehend beschriebenen Ausführungsbeispielen in erster Linie von Asphalt die Rede ist. Als weitere Beispiele sind z.B. Sand, Kies oder Erdboden zu nennen.

## Patentansprüche

1. Fördervorrichtung (12, 13), umfassend ein Förderband (1) mit einem Fördertrum (2) zum Fördern von Schüttgut und einem Rücklauftrum (3), wobei das Fördertrum (2) eine Förderfläche (4) aufweist, auf der ein Materialstrom (5) verläuft, dessen Förderrate durch das Produkt aus einer Lineargeschwindigkeit des Fördertrums (2) und einem Förderquerschnitt (9) des Materialstroms (5) gegeben ist, und mindestens zwei variable Förderstrombegrenzer (7), die zum variablen Verändern des auf ein und demselben Fördertrum (2) verlaufenden Materialstroms (5) vorgesehen sind, und die zu diesem Zweck jeweils zwischen einer ersten und einer zweiten Position bewegbar sind, wobei der Förderquerschnitt (9) stromabwärts der Förderstrombegrenzer (7) kleiner ist, wenn mindestens einer der Förderstrombegrenzer (7) in der zweiten Position angeordnet ist, als wenn beide Förderstrombegrenzer (7) in der ersten Position angeordnet sind, **dadurch gekennzeichnet, dass** die Förderstrombegrenzer (7) einen Halbzylinder (7) umfassen.

2. Fördervorrichtung nach Anspruch 1, **dadurch gekennzeichnet, dass** die Förderstrombegrenzer (7) sich bis auf die Förderfläche (4) erstrecken.

3. Fördervorrichtung nach Anspruch 1 oder 2, **dadurch gekennzeichnet, dass** die Förderstrombegrenzer (7) aus im Wesentlichen seitlichen Richtungen in den Materialstrom (5) hinein bewegbar sind.

4. Fördervorrichtung nach einem der vorangehenden Ansprüche, **dadurch gekennzeichnet, dass** die Förderstrombegrenzer (7) symmetrisch zu einer Mitte der Förderfläche (4) angeordnet sind.

5. Fördervorrichtung nach einem der vorangehenden Ansprüche, **dadurch gekennzeichnet, dass** die Förderstrombegrenzer (7) aus unterschiedlichen Richtungen in den Materialstrom (5) hinein bewegbar sind.

6. Fördervorrichtung nach einem der vorangehenden Ansprüche, **dadurch gekennzeichnet, dass** die Förderstrombegrenzer (7) aus im Wesentlichen gegenüberliegenden Richtungen in den Materialstrom (5) hinein bewegbar sind.

7. Fördervorrichtung nach einem der vorangehenden Ansprüche, **dadurch gekennzeichnet, dass** die Förderstrombegrenzer (7) synchron oder asynchron bewegbar sind.

8. Fördervorrichtung nach einem der vorangehenden Ansprüche, **dadurch gekennzeichnet, dass** die Förderstrombegrenzer (7) rotatorisch zu betätigen sind.

9. Fördervorrichtung nach einem der vorangehenden Ansprüche, **dadurch gekennzeichnet, dass** der Förderquerschnitt (9) durch eine Rotation der Förderstrombegrenzer (7) veränderbar ist.

10. Fördervorrichtung nach einem der vorangehenden Ansprüche, **dadurch gekennzeichnet, dass** die Förderstrombegrenzer (7) in den Materialstrom (5) hineinschwenkbar oder hineinschiebbar oder hineinklappbar sind.

11. Fördervorrichtung nach einem der vorangehenden Ansprüche, **dadurch gekennzeichnet, dass** der Förderquerschnitt (9) in einem Förderbereich (14), in dem der Materialstrom (5) die Förderstrombegrenzer (7) passiert, entlang einer Förderrichtung (R) variiert und vorzugsweise kleiner wird.

12. Fördervorrichtung nach einem der vorangehenden Ansprüche, **dadurch gekennzeichnet, dass** die Förderstrombegrenzer (7) in Abhängigkeit von der Fördergeschwindigkeit oder anderen Parametern einstellbar sind.

13. Fördervorrichtung nach einem der vorangehenden Ansprüche, **dadurch gekennzeichnet, dass** die Förderstrombegrenzer (7) durch ein elektrisches, hydraulisches oder pneumatisches Stellglied (8) einstellbar sind.

14. Fördervorrichtung nach einem der vorangehenden Ansprüche, **dadurch gekennzeichnet, dass** die Fördervorrichtung (12, 16) ein Straßenfertiger, ein Beschicker (12) oder ein Asphaltmischwerk (16) ist.

## Claims

1. Conveyor device (12, 13) comprising a conveyor belt (1) with a conveying strand (2) for conveying bulk material and a return strand (3), wherein the conveying strand (2) has a conveying surface (4) on which a material flow (5) is running whose feed rate is given by the product of a linear velocity of the conveying strand (2) and a conveying cross-section (9) of the material flow (5), and at least two variable flow limiting devices (7) that are provided for variably adjusting of the material flow (5) located on the same conveying strand (2) and that can each be moved for this purpose between a first and a second position, wherein the conveying cross-section (9) downstream of the flow limiting devices (7) is smaller when at least one of the flow limiting devices (7) is arranged in the second position than when both flow limiting devices (7) are arranged in the first position, **characterized in that** the flow limiting devices (7) comprise a semi-cylinder (7)..

2. Conveyor device according to Claim 1, **characterized in that** the flow limiting devices (7) extend onto the conveying surface.

3. Conveyor device according to Claim 1 or 2, **characterized in that** the flow limiting devices (7) are movable into the material flow (5) from substantially lateral directions.

4. Conveyor device according to one of the preceding claims, **characterized in that** the flow limiting devices (7) are arranged symmetrically to a center of the conveying surface (4).

5. Conveyor device according to one of the preceding claims, **characterized in that** the flow limiting devices (7) can be moved into the material flow (5) from different directions.

6. Conveyor device according to one of the preceding claims, **characterized in that** the flow limiting devices (7) can be moved into the material flow (5) from substantially opposite directions.

7. Conveyor device according to one of the preceding claims, **characterized in that** the flow limiting devices (7) can be moved synchronously or asynchronously.

8. Conveyor device according to one of the preceding claims, **characterized in that** the flow limiting devices (7) are to be operated rotatorily.

9. Conveyor device according to one of the preceding claims, **characterized in that** the conveying cross-section (9) is adjustable through a rotation of the flow limiting devices.

10. Conveyor device according to one of the preceding claims, **characterized in that** the flow limiting devices (7) can be pivoted, shifted or folded into the material flow (5).

11. Conveyor device according to one of the preceding claims, **characterized in that** in a conveying area (14) in which the material flow (5) passes the flow limiting devices (7), the conveying cross-section (9) varies along a conveying direction (R) and preferably becomes smaller.

12. Conveyor device according to one of the preceding claims, **characterized in that** the flow limiting devices (7) are adjustable in dependence of the conveying speed or other parameters.

13. Conveyor device according to one of the preceding claims, **characterized in that** the flow limiting devices (7) are adjustable by an electric, hydraulic or pneumatic actuator (8).

14. Conveyor device according to one of the preceding claims, **characterized in that** the conveyor device (12, 16) is a road paver, a material transfer vehicle (12) or an asphalt mixing plant (16).

## Revendications

1. Dispositif de transport, d'acheminement ou de convoyage de matériaux (12, 13), comprenant une bande de transport (1) avec un brin de transport (2) pour transporter du matériau en vrac, et un brin de retour (3), dispositif de transport
dans lequel le brin de transport (2) présente une surface de transport (4) sur laquelle s'étend un flux de matériau (5), dont le débit de transport est donné par le produit d'une vitesse linéaire du brin de transport (2) et d'une section transversale de transport (9) du flux de matériau (5), le dispositif comprenant également au moins deux limiteurs de flux de transport variables (7), qui sont prévus pour modifier de manière variable le flux de matériau (5) s'étendant sur un seul et même brin de transport (2), et qui, à cet effet, peuvent être déplacés respectivement entre une première et une deuxième position, et
dans lequel la section transversale de transport (9) est plus petite en aval des limiteurs de flux de transport (7), lorsqu'au moins un des limiteurs de flux de transport (7) est agencé dans la deuxième position, que lorsque les deux limiteurs de flux de transport (7) sont agencés dans la première position,
**caractérisé en ce que** les limiteurs de flux de transport (7) comprennent un demi-cylindre (7).

2. Dispositif de transport selon la revendication 1, **caractérisé en ce que** les limiteurs de flux de transport (7) s'étendent jusque sur la surface de transport (4).

3. Dispositif de transport selon la revendication 1 ou la revendication 2, **caractérisé en ce que** les limiteurs de flux de transport (7) peuvent être déplacés vers l'intérieur du flux de matériau (5), selon des directions sensiblement latérales.

4. Dispositif de transport selon l'une des revendications précédentes, **caractérisé en ce que** les limiteurs de flux de transport (7) sont agencés de manière symétrique par rapport à un milieu de la surface de transport (4).

5. Dispositif de transport selon l'une des revendications précédentes, **caractérisé en ce que** les limiteurs de flux de transport (7) peuvent être déplacés vers l'intérieur du flux de matériau (5), selon des directions différentes.

6. Dispositif de transport selon l'une des revendications précédentes, **caractérisé en ce que** les limiteurs de flux de transport (7) peuvent être déplacés vers l'intérieur du flux de matériau (5), selon des directions sensiblement opposées.

7. Dispositif de transport selon l'une des revendications précédentes, **caractérisé en ce que** les limiteurs de flux de transport (7) peuvent être déplacés de manière synchrone ou asynchrone.

8. Dispositif de transport selon l'une des revendications précédentes, **caractérisé en ce que** les limiteurs de flux de transport (7) sont à actionner de manière rotative.

9. Dispositif de transport selon l'une des revendications précédentes, **caractérisé en ce que** la section transversale de transport (9) peut être modifiée par une rotation des limiteurs de flux de transport (7).

10. Dispositif de transport selon l'une des revendications précédentes, **caractérisé en ce que** les limiteurs de flux de transport (7) peuvent être déplacés par pivotement, ou par coulissement ou encore par basculement, vers l'intérieur du flux de matériau (5).

11. Dispositif de transport selon l'une des revendications précédentes, **caractérisé en ce que** la section transversale de transport (9) varie le long d'une direction de transport (R) et devient notamment plus petite, dans une zone de transport (14) dans laquelle le flux de matériau (5) passe les limiteurs de flux de transport (7).

12. Dispositif de transport selon l'une des revendications précédentes, **caractérisé en ce que** les limiteurs de flux de transport (7) peuvent être réglés en fonction de la vitesse de transport ou d'autres paramètres.

13. Dispositif de transport selon l'une des revendications précédentes, **caractérisé en ce que** les limiteurs de flux de transport (7) peuvent être réglés par un organe de réglage (8) électrique, hydraulique ou pneumatique.

14. Dispositif de transport selon l'une des revendications précédentes, **caractérisé en ce que** le dispositif de transport (12, 16) est un finisseur de route, un alimentateur (12) ou une unité de mélange d'asphalte (16).
